# EUROPÄISCHE PATENTSCHRIFT

(11) **EP 0 777 106 B1**
(45) Veröffentlichungstag und Bekanntmachung des Hinweises auf die Patenterteilung: **20.06.2001**
(21) Anmeldenummer: 96118566.7
(22) Anmeldetag: 20.11.1996
(51) Int. Cl.: G01C 21/20, G11B 27/00

(54) **Einrichtung zur Kommunikation und Information in einem Kraftfahrzeug**
Communication and information device in a motor vehicle
Dispositif de communication et d'information dans un véhicule à moteur

(30) Priorität: 02.12.1995 DE 19545059
(43) Veröffentlichungstag der Anmeldung: 04.06.1997
(73) Patentinhaber: ADAM OPEL AG, 65423 Rüsselsheim (DE)
(72) Erfinder: Kahlstatt, Michael, Dipl.-Ing. (FH), 61440 Oberursel (DE); Kalz, Torsten, Dr.-Ing., 65510 Hünstetten (DE)

(56) Entgegenhaltungen:
- EP-A- 0 383 094
- EP-A- 0 383 529
- EP-A- 0 699 895
- DE-A- 4 102 856
- US-A- 5 157 614
- US-A- 5 239 700

## Beschreibung

Die Erfindung bezieht sich auf eine Einrichtung zur Kommunikation und Information in einem Kraftfahrzeug, mit den im Oberbegriff des Patentanspruchs 1 angegebenen Merkmalen. Derartige Einrichtungen sind bereits bekannt und bestehen aus mehreren Komponenten, wobei in Betracht kommen:
- ein Wiedergabegerät für Musik-CD-Platten,
- eine Informations-Komponente, wie beispielsweise ein Routenführungssystem (auch andere Bezeichnungen wie Verkehrsleitsystem, elektronische Landkarte ... sind gebräuchlich),
- ein Telefon oder
- ein Computer.
Die Einrichtung kann durch weitere Audio-Komponenten, insbesondere ein Radio ergänzt sein.

Es ist beispielsweise aus der DE 37 26 784 A1 bekannt, daß bei einer Kombination mehrerer solcher Komponenten einige Bestandteile gemeinsam nutzbar sind. So kann eine zentrale Bedieneinheit für alle Komponenten sinnvoll sein, da der freie Bauraum für die Unterbringung verschiedener Bedieneinheiten im Kraftfahrzeug begrenzt ist. Vielfach werden auch Antennen, Lautsprecher, Mikrofone oder ähnliches von allen Komponenten gemeinsam genutzt.

Die DE 37 26 784 A1 sieht vor, daß ein CD-Wiedergabegerät vorhanden ist, welches Musik-Daten von Daten eines Verkehrsleitsystems unterscheiden kann. Es kann also entweder ein Verkehrsleitsystem genutzt oder Musik abgespielt werden.

Aus der DE 43 00 848 A1 ist ein Autotelefon bekannt, welches mit Audioeinrichtungen kombiniert wurde. Eine Kopfeinheit und ein Systemcontroller steuern den Betrieb der gesamten Anlage. Es kann jedoch ebenfalls immer nur eine Komponente der Anlage aktiv sein. Wird der Betrieb eines CD-Wiedergabegerätes unterbrochen, kann der aktuelle Wiedergabepunkt gespeichert und der Betrieb später dort wieder fortgesetzt werden.

Befinden sich mehrere Komponenten einer o. g. Einrichtung im Kraftfahrzeug und greifen mehrere dieser Komponenten auf Daten zurück, welche auf CD-Platten gespeichert sind, ist derzeit nur dann ein paralleler Betrieb dieser Komponenten frei von Unterbrechungen möglich, wenn mehrere CD-Wiedergabegeräte bzw. Leseköpfe im Kraftfahrzeug installiert werden. Dies erfordert einen großen Bauraum und verursacht hohe Kosten.

Lösungen zur Abhilfe sind in der US-5 157 614 A und in der EP-0 383 094 A vorgeschlagen, wo ein hoher Komfort bei geringem Aufwand angestrebt wird. Bei Vorhandensein nur eines Lesekopfes in einem CD-Wechsler werden vornehmlich Abspielpausen der Musik-CD-Platten genutzt, um Daten der Informations-Komponente von einer anderen CD-Platte zu lesen. Diese Daten werden, wie in der EP-0 383 094 A angesprochen, in einem elektronischen Speicherelement der Informations-Komponente zwischengespeichert. Normale Abspielpausen, die nicht immer am Ende eines Musiktitels, sondern am Ende einer CD-Spur liegen, müssen jedoch für den CD-Wechsel verlängert werden, so daß kein uneingeschränkter Parallelbetrieb möglich ist. Da der Speicherplatz der Speicherelemente bekannter Informations-Komponenten begrenzt ist, ist ein häufiges Einlesen von Daten bei Unterbrechung der Musik-Abspielung nötig.

Es ist Aufgabe der Erfindung, eine Einrichtung zur Kommunikation und Information im Kraftfahrzeug sowie ein Verfahren zum Betrieb dieser Einrichtung zu schaffen, wobei mehrere Komponenten der Einrichtung auch parallel betreibbar sein sollen und dabei Zugriff auf Daten haben, die auf CD-Platten gespeichert sind. Dabei wird ein möglichst geringer Aufwand an Bauraum und Kosten angestrebt.

Zur Lösung dieser Aufgabe zeichnet sich die erfindungsgemäße Einrichtung durch die im Fatentanspruch 1 angegebenen Merkmale aus. Weitere Einzelheiten der Erfindung ergeben sich aus den Patentansprüchen 2 bis 8.

Eine Audioanlage als Bestandteil der Einrichtung beinhaltet ein Wiedergabegerät für Musik-CD-Platten. Dafür ist ein CD-Wechsler vorgesehen, der beispielsweise im Kofferraum des Kraftfahrzeugs anzuordnen ist. Des weiteren gehört eine Informations-Komponente zu der Einrichtung. Hier sei beispielhaft ein Routenführungssystem bekannter Art genannt. Systeme dieser Art greifen ebenfalls auf Daten zurück, die auf CD-Platten gespeichert sind.

Unter dem Begriff CD-Platten sind allgemein portable Speichermedien für digitalisierte Daten zu verstehen. Sie werden in verschiedenen Größen und mit verschiedener Speicherkapazität angeboten. Im allgemeinen sind diese Speichermedien heute von Geräten beim Verbraucher ausschließlich "lesbar", jedoch werden auch Geräte in den Markt eingeführt, die ein "Beschreiben" der CD-Platten ermöglichen. Die CD-Platten werden von einem exakt zu positionierenden Lesekopf gelesen, wobei sie sich in Rotation befinden. CD-Wechsler mit nur einem Lesekopf können auch jeweils nur eine CD-Platte lesen und ein Wechsel zum Lesen einer anderen CD-Platte erfordert Zeit. Alle von den Komponenten der erfindungsgemäßen Einrichtung benötigten CD-Platten werden in einem einzigen solchen CD-Wechsler gelagert.

Als Bestandteil der Einrichtung sind neben den einzelnen Komponenten ein Schreib-/Lesespeicher und ein Daten-Manager vorgesehen. Der Daten-Manager organisiert den Zugriff auf die verschiedenen CD-Platten im CD-Wechsler entsprechend dem Bedarf der einzelnen Komponenten. Ist ausschließlich das Wiedergabegerät für Musik-CD-Platten in Betrieb, liest der Lesekopf des CD-Wechslers eine solche CD-Platte wie bekannt, und diese Daten werden über den Daten-Manager direkt an das Wiedergabegerät weitergeleitet. Die Digital-Analog-Wandlung erfolgt ebenso wie die Verstärkung in an sich bekannter Weise, bevor die Signale zu Lautsprechern der Einrichtung geleitet werden.

Wird dann zusätzlich ein Routenführungssystem als Informations-Komponente im Kraftfahrzeug in Betrieb genommen, benötigt auch diese Komponente Daten von einer zugehörigen CD-Platte. Es wird entweder durch Fahrzeuginsassen vorgegeben, welche Komponente bevorzugt zu behandeln ist, oder die Komponente mit dem höchsten Datenbedarf wird automatisch als bevorzugt eingestuft, worauf weiter unten detailliert eingegangen wird.

Die CD-Platte, die zu der bevorzugten Komponente gehört, wird im CD-Wechsler gelesen und die benötigten Daten werden direkt an die Komponente weitergeleitet. In Pausen (beispielsweise zwischen zwei Musiktiteln oder bei unveränderter Verkehrssituation) wird die CD-Platte gewechselt und es werden Daten von der CD-Platte der nicht bevorzugten Komponente (bzw. Komponenten) in den Schreib-/Lesespeicher eingeschrieben. Mit diesen Daten kann auch diese Komponente dann für eine gewisse Zeit aktiv sein. Je nach Abstand von Pause zu Pause wird abgeschätzt, welcher Datenbedarf besteht und diese Datenmenge wird in den Schreib-/Lesespeicher geladen. Ist das CD-Platten-Wiedergabegerät (Musik) beispielsweise die bevorzugte Komponente, ist bekannt, welche Länge die Musiktitel haben und ein Datenbedarf für das Routenführungssystem ist kalkulierbar. Je nach erreichbarer Geschwindigkeit beim Wechseln der CD-Platten und beim Einspeichern der nötigen Daten, kann es notwendig sein, die normalerweise vorhandenen Pausen zwischen Musiktiteln etwas zu verlängern, jedoch ist kein grundsätzlicher Verzicht erforderlich.

Das Lesen und Abspeichern der Daten in dem Schreib-/Lesespeicher erfolgt mit wesentlich höherer Taktfrequenz, als dies beim normalen (direkten) Lesen der CD-Platten vorgenommen wird. Somit kann man mit den abgespeicherten Daten wesentlich länger arbeiten, als Zeit für den Vorgang des Ladens des Schreib-/Lesespeichers erforderlich ist.

Von besonderem Vorteil ist, daß der Schreib-/Lesespeicher auch zum Speichern weiterer zusätzlich benötigter Daten verfügbar ist. Es können beispielsweise aktuelle Verkehrsinformationen, die auch im Routenführungssystem berücksichtigt werden können, oder Computerdaten oder Telefonhilfsfunktionen ... gespeichert werden. Diese Daten können wie bekannt per Funk oder anderweitig an das Fahrzeug übertragen werden. Es besteht auch die Möglichkeit, sehr oft benötigte Daten von bestimmten CD-Platten (beispielsweise Daten des Routenführungssystems zur Wohngegend des Fahrzeuginhabers) permanent in dem Schreib-/Lesespeicher abzulegen, so daß diese CD-Platte nicht immer benötigt wird. Diese Daten werden nur dann überschrieben, wenn der Speicherplatz dringend für andere Anwendungen benötigt wird, was vom Daten-Manager zu organisieren ist. Hierzu bestehen diverse Ausgestaltungsmöglichkeiten.

Der Daten-Manager sollte integraler Bestandteil des CD-Wechslers sein, dem auch der Schreib-/Lesespeicher zugeordnet werden kann. Beides kann jedoch auch als Bestandteil einer der anderen Komponenten im Kraftfahrzeug angeordnet werden.

Weitere Details der Erfindung werden anhand eines Ausführungsbeispiels beschrieben. Die zugehörige
- Fig. 1: zeigt schematisch eine erfindungsgemäße Einrichtung mit einigen notwendigen und einigen möglichen Verknüpfungen zwischen den Komponenten und
- Fig. 2: zeigt schematisch mögliche Varianten des Datenflusses innerhalb der Einrichtung nach Fig. 1.

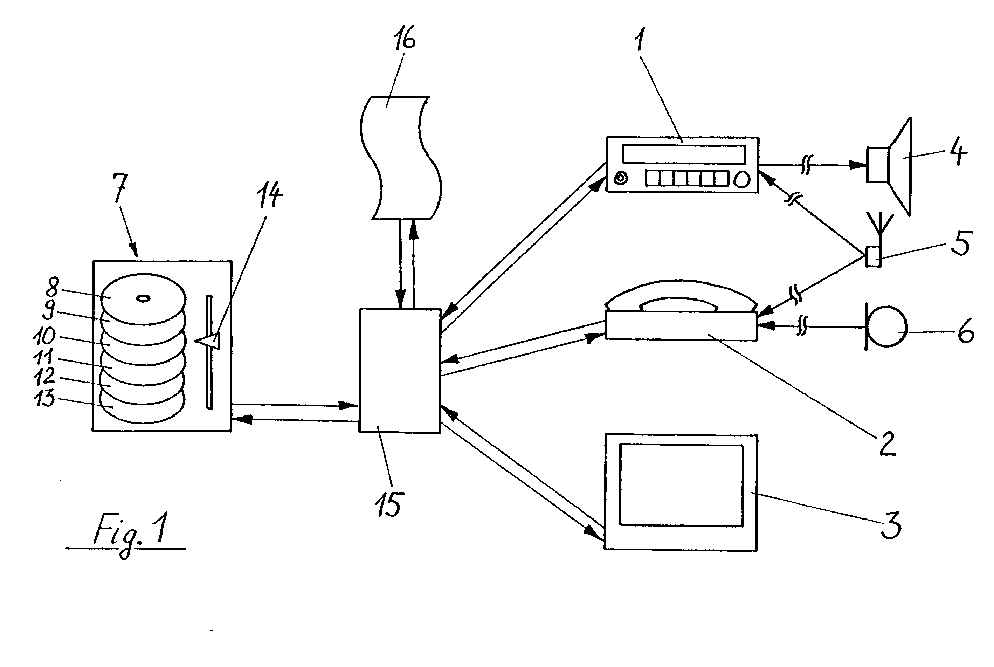

Die in Fig. 1 mit Hilfe von Symbolen dargestellte Einrichtung ist innerhalb eines Kraftfahrzeugs anzuordnen. Sie besteht aus einzelnen Komponenten zur Kommunikation und Information, wobei speziell eine Audio-Komponente 1, eine Telefon-Komponente 2 und ein Routenführungssystem 3 als Informations-Komponente gezeigt sind. Die Audio-Komponente 1 beinhaltet sowohl Elemente eines CD-Platten-Wiedergabegerätes als auch eines Radios. Sie ist verbunden mit Lautsprechern 4 sowie einer Antenne 5. Die Antenne 5 kann ebenso wie für das Radio auch für das Telefon 2 nutzbar sein. Es sind auch per Funk übermittelte Daten empfangbar. Das Telefon 2 steht in Verbindung mit einem Mikrofon 6, welches als Freisprechmikrofon im Fahrzeug angeordnet ist. Eine Verbindung zwischen Telefon 2 und Audio-Komponente 1 ist nicht gezeigt, kann jedoch vorhanden sein, so daß Funktionen der Audio-Komponente 1 auch beim Telefonieren nutzbar sind.

Die Komponente Routenführungssystem 3 beinhaltet ein Display, Bedienungselemente (kann zumindest teilweise auch von der Audio-Komponente 1 aus erfolgen), eine Recheneinheit sowie ein Ortungssystem, mit Hilfe dessen die Position des Fahrzeugs bestimmbar ist. Der Aufbau aller drei Komponenten ist an sich bekannt.

Sowohl das CD-Platten-Wiedergabegerät als auch das Routenführungssystem 3 greifen im Betrieb auf Daten zurück, die auf CD-Platten gespeichert sind. Es ist ein CD-Wechsler 7 beispielsweise im Kofferraum des Fahrzeugs vorgesehen, der die CD-Platten 8 bis 13 für alle Anwendungen beherbergt. Der CD-Wechsler 7 hat nur einen Lesekopf 14 (äußerst schematisch gezeigt). Die Einrichtung beinhaltet des weiteren einen Daten-Manager 15 sowie einen Schreib/Lesespeicher 16. Diverse, jedoch nicht alle Möglichkeiten des Informationsflusses zwischen den Einzelkomponenten sind in Fig. 1 durch Pfeile angedeutet. Praktisch zu realisieren sind diese Verbindungen durch Kabel oder durch drahtlose Sender-Empfänger-Verbindungen.

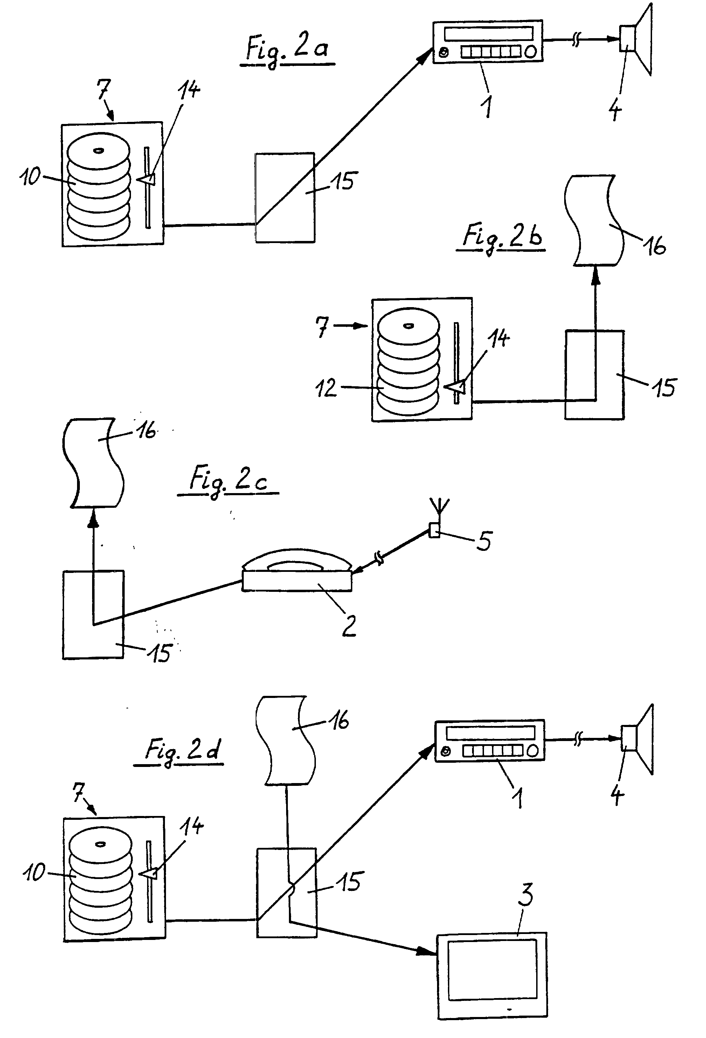

Obwohl jeweils nur eine CD-Platte 8 bis 13 im CD-Wechsler 7 lesbar ist, ermöglicht die gezeigte Anordnung den gleichzeitigen Betrieb mehrerer Komponenten. Es kann beispielsweise gleichzeitig Musik von einer CD-Platte 10 gehört und das Routenführungssystem genutzt werden. Dies wird anhand von Fig. 2 erläutert.

Fig. 2 a zeigt den Betrieb der Einrichtung, für den Fall, daß nur eine Komponente, hier insbesondere die Audio-Komponente 1, in Betrieb ist. Es wird eine bestimmte CD-Platte 10 angefordert und ihr Inhalt wird vom Daten-Manager 15 direkt an die Audio-Komponente 1 weitergeleitet, dort gewandelt, verstärkt und zu den Lautsprechern 4 geleitet.

Fig. 2 b zeigt einen Zustand der Einrichtung, nachdem eine weitere Komponente (hier Routenführungssystem 3) in Betrieb gesetzt wurde und Daten von einer CD-Platte 12 benötigt. Für den Fall, daß die Audio-Komponente 1 weiterhin als bevorzugt zu betrachten ist, werden Daten von der CD-Platte 12 des Routenführungssystems 3 mit hoher Taktfrequenz in den Schreib-/Lesespeicher 16 geladen, während die Übertragung zur Audio-Komponente 1 unterbrochen ist. Hierzu wird beispielsweise eine Pause zwischen zwei Musiktiteln genutzt und ggf. etwas verlängert. Wie in Fig. 2 c gezeigt, können auch weitere Daten in den Schreib-/Lesespeicher 16 geladen werden, die von anderen Quellen als dem CD-Wechsler 7 stammen. Hierfür kommen per Funk über die Antenne 5 und das Telefon 2 bzw. die Audio-Komponente 1 übertragene Daten in Betracht, aber es können auch Daten von einem nicht gezeigten Computer oder sonstigen weiteren Komponenten sein. Die gesamte Beschikkung des Schreib-/Lesespeichers 16 mit Daten wird vom Daten-Manager 15 entsprechend der bestehenden Anforderungen der Komponenten organisiert. Der Datenbedarf wird an den Daten-Manager 15 übermittelt und dieser stellt die Daten nach einem zeitlich vorgegebenen Regime in den Schreib-/Lesespeicher 16 oder übermittelt sie direkt an die Komponenten.

In Fig. 2 d ist der parallele Betrieb der Audio-Komponente 1 und des Routenführungssystems 3 verdeutlicht. Im CD-Wechsler 7 wird wieder die CD-Platte 10 gelesen und diese Daten werden direkt an die Audio-Komponente 1 weitergeleitet. Gleichzeitig wird bei Bedarf der Inhalt des Schreib-/Lesespeichers 16 an das Routenführungssystem 3 weitergegeben. Die notwendigen Daten von der CD-Platte 12 sind für das Routenführungssystem 3 verfügbar. Damit ist der zufriedenstellende gleichzeitige Betrieb mehrerer Komponenten der Einrichtung möglich, obwohl der CD-Wechsler 7 nur einen Lesekopf 14 aufweist. Es wird nur ein geringer Aufwand nötig, wenn eine bisher nicht im Kraftfahrzeug vorhandene Komponente nachgerüstet werden soll.

Welche der Komponenten als bevorzugt gelten soll, kann einerseits von Insassen des Fahrzeugs vorgegeben werden. Andererseits kann diese Auswahl auch vom Daten-Manager 15 automatisch vorgenommen und so optimiert werden. Die Komponente mit dem aktuell höchsten Datenbedarf sollte bevorzugt behandelt werden. Befindet sich das Fahrzeug beispielsweise auf der Autobahn mit einem noch weit entfernten Fahrziel, wird das Routenführungssystem 3 nicht viele Daten benötigen. Die Audio-Komponente 1 kann bevorzugt behandelt werden. Fährt das Fahrzeug jedoch in einen Stadtbereich, muß nahezu ständig auf Daten der CD-Platte 12 zugegriffen werden und die Audio-Komponente 1 kann nicht mehr bevorzugt werden. Immer beim Halt des Fahrzeugs (beispielsweise an einer Ampel) kann ein Musiktitel von der CD-Platte 10 in den Schreib-/Lesespeicher 16 geladen werden. Erforderliche Datenmengen sind abschätzbar, wobei insbesondere die Länge von Musiktiteln auf CD-Platten bekannt ist. Andererseits kann auch der Datenbedarf des Routenführungssystems 3 anhand der durchschnittlichen Fahrzeuggeschwindigkeit geschätzt werden. Zur Minimierung von Zeiten der Unterbrechung des Datenflusses kann auch grundsätzlich ein wechselweises Einschreiben von Daten verschiedener CD-Platten 8 bis 13 in den Schreib-/Lesespeicher 16 vorgesehen werden. Damit erfolgt dann die Datenübertragung praktisch immer von dem Schreib-/Lesespeicher 16 aus, dessen Inhalt ständig mit hoher Geschwindigkeit aktualisiert wird. Diese Aufgaben sind vom Daten-Manager 15 zu lösen, der als Steuerung der Einrichtung zu betrachten ist und zur Ausführung seiner Funktionen mit den nötigen Rechenmitteln (Mikroprozessor) und Steuermitteln ausgerüstet ist, sowie die nötigen Eingangsinformationen erhält.

## Patentansprüche

1. Einrichtung zur Kommunikation und Information in einem Kraftfahrzeug mit zumindest einer Audio-Komponente (1), insbesondere einem Wiedergabegerät für Musik-CD-Platten (8 bis 13), mit zumindest einer Informations-Komponente, wie Routenführungssystem (3), welche ebenfalls auf Daten zurückgreift, die auf CD-Platten (8 bis 13) gespeichert sind, und mit einem elektronischen Datenmanager (15), der den Betrieb des CD-Wechslers (7) in Abhängigkeit von Anforderungen der Insassen organisiert, sowie ggf. mit weiteren von Insassen des Kraftfahrzeugs nutzbaren Komponenten wie Telefon (2) oder Computer, wobei alle CD-Platten (8 bis 13) der Komponenten gemeinsam in einem CD-Wechsler (7) mit einem Lesekopf (14) angeordnet sind, **gekennzeichnet durch** einen komponentenunabhängigen elektronischen Schreib-/Lesespeicher (16) für zumindest einen Teil des Inhaltes zumindest einer beliebigen CD-Platte (8 bis 13) und dadurch, daß der Daten-Manager (15),
- den Inhalt von CD-Platten (8 bis 13) entweder direkt an eine Komponente weiterleitet oder zumindest einen Teil davon in den Schreib-/Lesespeicher (16) einschreibt und
- den Inhalt des Schreib-/Lesespeichers (16) bedarfsweise an eine Komponente weiterleitet, was parallel zur direkten Weiterleitung des Inhaltes einer CD-Platte (8 bis 13) an eine andere Komponente erfolgen kann.

2. Einrichtung nach Anspruch 1, **dadurch gekennzeichnet**, daß der Daten-Manager (15) eine der von den Insassen aktivierenden Komponenten als bevorzugte Komponente behandelt, wobei der Inhalt zugehöriger CD-Platten (8 bis 13) direkt an diese Komponente weitergeleitet wird.

3. Einrichtung nach Anspruch 2, **dadurch gekennzeichnet,** daß die Bevorzugung einer Komponente entweder nach vorgebbaren Insassenwünschen erfolgt oder automatisch für die Komponente festgelegt wird, für die der Daten-Manager (15) den höchsten Datenbedarf überschlägig ermittelt hat.

4. Einrichtung nach Anspruch 2 oder 3, **dadurch gekennzeichnet,** daß zumindest ein Teil des Inhaltes von CD-Platten (8 bis 13), die zu nicht bevorzugt zu behandelnden Komponenten gehören, dann im CD-Wechsler (7) gelesen und in den Schreib-/Lesespeicher (16) geschrieben wird, wenn bei der bevorzugt zu behandelnden Komponente kein oder nur ein geringer Datenbedarf besteht.

5. Einrichtung nach Anspruch 1, **dadurch gekennzeichnet,** daß der Schreib-/Lesespeicher (16) auch mit von außen an das Kraftfahrzeug übermittelten Daten beschreibbar ist, wobei diese Daten anschließend einer Komponente der Einrichtung zur Verfügung stehen.

6. Einrichtung nach Anspruch 1, **dadurch gekennzeichnet,** daß der Inhalt besonders oft benötigter CD-Platten (8 bis 13) oder des wesentlichsten Teils davon dauerhaft in den Schreib-/Lesespeicher (16) einschreibbar ist und dort nur dann überschrieben wird, wenn eine sehr hohe Speicherkapazität gefordert ist.

7. Einrichtung nach den Ansprüchen 1 bis 6, **dadurch gekennzeichnet,** daß der Daten-Manager (15) integraler Bestandteil des CD-Wechslers (7) oder einer der anderen Komponenten der Einrichtung ist.

8. Einrichtung nach zumindest einem der Ansprüche 1 bis 7, **dadurch gekennzeichnet,** daß das Lesen des Teils des Inhaltes der CD-Platten (8 bis 13), der im Schreib-/Lesespeicher (16) abgelegt werden soll, mit einer Taktfrequenz erfolgt, die wesentlich höher ist, als die Taktfrequenz beim Lesen von Daten, die an eine der Komponenten weitergeleitet werden.

## Claims

1. Apparatus for communication and information in a motor vehicle with at least one audio component (1), in particular a playback device for music CDs (8 to 13), with at least one information component such as route guidance system (3) which also refers to data which are stored on CDs (8 to 13), and with an electronic data manager (15) which organises operation of the CD changer (7) as a function of requests of the passengers, as well as, if occasion arises, with further components that can be used by passengers of the motor vehicle such as telephone (2) or computer, wherein all CDs (8 to 13) of the components are arranged together in a CD changer (7) with a read head (14), characterised by a component-independent electronic read-write memory (16) for at least a portion of the contents of at least any one CD (8 to 13) and in that the data manager (15)
- either directly forwards the contents of CDs (8 to 13) to a component or writes at least a portion thereof in the read-write memory (16) and
- forwards the contents of the read-write memory (16) to a component as required, which can take place in parallel with direct forwarding of the contents of a CD (8 to 13) to another component.

2. Apparatus according to claim 1, characterised in that the data manager (15) treats one of the components to be activated by the passengers as the preferred component, wherein the contents of associated CDs (8 to 13) are forwarded directly to this component.

3. Apparatus according to claim 2, characterised in that the preference for one component either takes place according to preset passenger requests or is fixed automatically for the component for which the data manager (15) has roughly determined the maximum data demand.

4. Apparatus according to claim 2 or 3, characterised in that at least a portion of the contents of CDs (8 to 13) which belong to components not to be treated preferentially is then read in the CD changer (7) and written in the read-write memory (16) if there is no data demand or not much for the component to be treated preferentially.

5. Apparatus according to claim 1, characterised in that the read-write memory (16) can also be written with data transmitted to the motor vehicle from the outside, wherein these data are then available to a component of the apparatus.

6. Apparatus according to claim 1, characterised in that the contents of CDs (8 to 13) which are needed particularly often or of the most essential portion thereof can be written permanently in the read-write memory (16) and overwritten there only if a very high storage capacity is required.

7. Apparatus according to claims 1 to 6, characterised in that the data manager (15) is an integral part of the CD changer (7) or of one of the other components of the apparatus.

8. Apparatus according to one or more of claims 1 to 7, characterised in that reading of the portion of the contents of the CDs (8 to 13) which is to be filed in the read-write memory (16) is effected at a clock frequency which is substantially higher than the clock frequency when reading data which are forwarded to one of the components.

## Revendications

1. Dispositif de communication et d'information dans un véhicule à moteur, comportant au moins un composant audio (1), en particulier un appareil de lecture de disques compacts de musique (8 à 13), au moins un composant d'information, comme un système de navigation (3), qui a également recours à des données qui sont mémorisées sur des disques compacts (8 à 13), et un gestionnaire de données (15) électronique qui organise le fonctionnement du changeur de CD (7) en fonction de demandes des passagers, et éventuellement des composants supplémentaires pouvant être utilisés par des passagers du véhicule automobile, tels qu'un téléphone (2) ou un ordinateur, tous les disques compacts (8 à 13) des composants étant disposés conjointement dans un changeur de CD (7) équipé d'une tête de lecture (14), **caractérisé** par une mémoire à écriture / lecture (16) électronique, indépendante des composants, pour au moins une partie du contenu d'au moins un disque compact (8 à 13) quelconque et en ce que le gestionnaire de données (15),
- soit transmet le contenu de disques compacts (8 à 13) directement à un composant soit enregistre au moins une partie de ce contenu dans la mémoire à écriture / lecture (16) et
- transmet le contenu de la mémoire à écriture / lecture (16) en cas de besoin à un composant, ce qui peut s'effectuer en parallèle de la transmission directe du contenu d'un disque compact (8 à 13) à un autre composant.

2. Dispositif selon la revendication 1, **caractérisé** en ce que le gestionnaire de données (15) traite un des composants activés par les passagers comme composant prioritaire, le contenu de disques compacts (8 à 13) associés étant transmis directement à ce composant.

3. Dispositif selon la revendication 2, **caractérisé** en ce que la priorité est accordée à un composant soit en fonction de souhaits des passagers pouvant être prédéterminés, soit automatiquement pour le composant pour lequel le gestionnaire de données (15) a déterminé de façon sommaire les besoins en données les plus élevés.

4. Dispositif selon la revendication 2 ou 3, **caractérisé** en ce qu'au moins une partie du contenu de disques compacts (8 à 13) qui appartiennent à des composants à ne pas traiter de façon prioritaire, est ensuite lue dans le changeur de CD (7) et enregistrée dans la mémoire à écriture / lecture (16) lorsque le composant à traiter de façon prioritaire n'a aucun besoin en données ou seulement un besoin en données restreint.

5. Dispositif selon la revendication 1, **caractérisé** en ce que des données transmises de l'extérieur au véhicule automobile peuvent également être enregistrées dans la mémoire à écriture / lecture (16), ces données étant ensuite à la disposition d'un composant du dispositif.

6. Dispositif selon la revendication 1, **caractérisé** en ce que le contenu de disques compacts (8 à 13) utilisés de façon particulièrement fréquente ou de la majeure partie de ces disques peut être enregistré de manière durable dans la mémoire à écriture / lecture (16) et n'y est effacé que lorsqu'une très grande capacité mémoire est nécessaire.

7. Dispositif selon les revendications 1 à 6, **caractérisé** en ce que le gestionnaire de données (15) fait partie intégrante du changeur de CD (7) ou de l'un des autres composants du dispositif.

8. Dispositif selon au moins une des revendications 1 à 7, **caractérisé** en ce que la lecture de la partie du contenu des disques compacts (8 à 13) qui doit être stockée dans la mémoire à écriture / lecture (16), s'effectue avec une fréquence d'horloge qui est beaucoup plus élevée que la fréquence d'horloge lors de la lecture de données qui sont transmises à un des composants.
